# EUROPÄISCHE PATENTANMELDUNG

(11) **EP 0 551 661 A1**
(43) Veröffentlichungstag der Anmeldung: **21.07.1993**
(21) Anmeldenummer: 92122161.0
(22) Anmeldetag: 31.12.1992
(51) Int. Cl.: B65G 69/00

(54) **Überladebrücke**

(30) Priorität: 17.01.1992 DE 4201110
(71) Anmelder: ALTEN GERÄTEBAU GMBH, D-30974 Wennigsen (DE)
(72) Erfinder: Alten, Kurt, W-3015 Wennigsen (DE)
(74) Vertreter: Depmeyer, Lothar

(57) **Zusammenfassung**

Die Erfindung betrifft eine Überladebrücke (7) vor einer verschliessbaren Gebäudeöffnung (3), wobei die Überladebrücke (7) mit einer um eine waagerechte Achse (6) verschwenkbaren Brückenplatte (7) versehen ist, die am freien Ende mit einer ein- und ausfahrbaren Verlängerung (10) zur Auflage auf das zu be- bzw. entladende fahrzeug versehen ist. Um eine gesteigerte Isolationswirkung zur Energieeinsparung zu erzielen, und zwar insb. beim Ladebetrieb an Tiefkühlhäusern, (1) wird aufgrund der Erfindung die Überladebrücke (7) mit einer kanalartigen (12,13,16), wärme- bzw. kälteisolierenden, sich an das Gebäude (1) anschliessenden Umkleidung versehen, die vorne im wesentlichen mit dem freien Ende der Brückenplatte abschliesst und dort mit einem Torverschluß (21) ausgestattet ist.

## Beschreibung

Die Erfindung betrifft eine vor einer verschliessbaren Gebäudeöffnung angeordnete Überladebrücke mit einer gebäudeseitig um eine waagerechte Achse verschwenkbaren Brückenplatte, die an ihrem freien Ende mit einer ein- und ausfahrbaren Verlängerung zur Auflage auf dem zu be- bzw. entladenden Fahrzeug versehen ist.

Es ist bereits bekannt, Überladebrücken innerhalb eines Gebäudes anzuordnen und unterhalb der Überladebrücke eine isolierende Wandung anzuordnen, auf die ein Gebäudeverschluss z.B. ein Sektionaltor abgesenkt wird, wenn die Überladebrücke nicht benötigt wird. Eine solche Anordnung ist zwar wegen seiner guten Isolationswirkung energiesparend, jedoch ist sie im allgemeinen nur dann voll wirksam, wenn das Sektionaltor verschlossen ist. Beim Ladebetrieb kann nämlich in manchen Fällen ein Wärmefluss nicht ausreichend unterbunden werden.

Der Erfindung liegt im wesentlichen die Aufgabe zugrunde, die Isolationswirkung noch mehr zu steigern, um so einen energiesparenden Effekt auch bei vergleichsweise hohen Temperaturdifferenzen z.B. beim Ladebetrieb an Tiefkühlhäusern durchführen zu können.

Zur Lösung dieser Aufgabe ist erfindungsgemäss die Überladebrücke mit einer tunnelartigen, wärme- bzw. kälteisolierenden, sich an das Gebäude anschliessenden Umkleidung versehen, die vorne im wesentlichen mit dem freien Ende der Brückenplatte abschliesst und dort mit einem torartigen Verschluss versehen ist.

Demgemäss befinden sich unterhalb, zu beiden Seiten und oberhalb der Überladebrücke isolierende Wandungen in Form von Wandungsteilen einer tunnelartigen Umkleidung. Hinzu kommt, dass einerseits die Gebäudeöffnung und andererseits die vordere Öffnung des Tunnels verschliesbar sind, wobei es sich versteht, dass diese Verschlusselemente über eine ausreichende Wärmeisoltionswirkung verfügen müssen. Daher befindet sich die Überfahrbrücke gewissermassen in einer Schleuse, die wahlweise zum Gebäude und wahlweise zum Fahrzeug hin geöffnet werden kann. Dementsprechend kann ein Ladebetrieb vollzogen werden, indem die betreffenden Verschlüsse vor dem Ladefahrzeug geöffnet und hinter dem Ladefahrzeug geschlossen werden. Eine solche Handhabung und Steuerung ist möglich, weil die Ladefahrzeuge sowohl im Gebäude als auch in dem zu be- bzw. entladenden Fahrzeug eine ausreichende Verweilzeit haben. Es kann sogar die Verweilzeit der Ladefahrzeuge auf der Überladebrücke genutzt bzw. bei der Steuerung der Verschlüsse berücksichtigt werden. Auch ist es dann von Vorteil, wenn schnell betätigbare Verschlüsse z.B. sog. Schnelltore benutzt werden.

Die Erfindung schliesst nicht aus, dass vor der tunnelartigen Verkleidung der Überladebrücke noch eine schürzenartige Abdichtung angeordnet wird, die beim Andocken den Spalt zwischen dem Fahrzeugheck und dem freien Ende der Verkleidung abdichtet bzw. isolierend überbrückt.

Weitere Einzelheiten der Erfindung werden anhand der Zeichnung erläutert, in der ein Ausführungsbeispiel der Erfindung dargestellt ist.

Es zeigen :
- Fig. 1,: eine Verladestation vor einem Tiefkühlhaus, und zwar im senkrechten Mittelschnitt und
- Fig. 2: einen Schnitt nach der Linie II - II von Fig. 1.

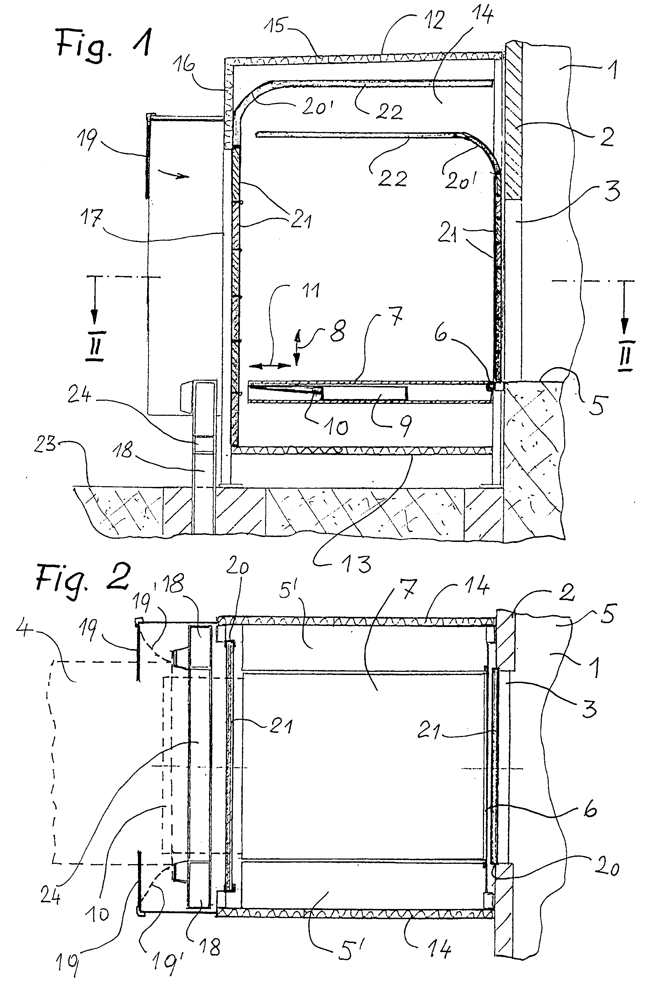

Das Tiefkühlhaus 1 hat eine Aussenwand 2 und eine Öffnung 3, über die das Tiefkühlgut von einem in Fig. 2 gestrichelt angedeuteten Fahrzeug 4 in das Tiefkühlhaus 1 verbracht oder vom Tiefkühlhaus 1 in das Fahrzeug 4 verladen werden kann. In Höhe der Bodenfläche 5 des Tiefkühlhauses 1 ist unmittelbar vor diesem Haus eine waagerechte Schwenkachse 6 gelagert, die zur schwenkbaren Lagerung einer in der Ruhestellung waagerecht liegenden Brückenplatte 7 dient. Ihre zum Halten und Verschwenken dienenden Mittel sind bekannt und nicht dargestellt. Eine Verschwenkung der Brückenplatte 7 kann im Sinne des Pfeiles 8 erfolgen. Innerhalb der Brückenplatte 7 befindet sich ein längs zur Brücke verfahrbarer Schlitten 9 mit einer vorne daran befestigten Verlängerung 1o, die in der Betriebsstellung der Überladebrücke, also bei ausgefahrener Verlängerung 1o auf der Plattform des Fahrzeuges 4 aufliegt ( in Fig. 2 gestichelt dargestellt ). Der Pfeil 11 zeigt die Bewegungsrichtung der Verlängerung 1o an. Zu beiden Seiten der Brückenplatte 7 befindet sich noch in Höhe der Bodenfläche 5 eine Trittfläche 5'.

Die so beschaffene Überladebrücke mit den Teilen 6, 7, 9 und 1o weist eine tunnel- oder auch kanalartige Umkleidung 12 auf, die gebäudeseitig fugendicht an das Gebäude bzw. Tiefkühlhaus 1 anschliesst und sich geringfügig über das freie Ende der Brückenplatte 7 hinaus erstreckt und aus einem Werkstoff besteht, der Energieverluste abdichten kann. Dazu können Paneele benutzt werden. Die Bodenwand der Verkleidung 12 ist dabei mit 13, die Seitenwände mit 14 und das Dachteil mit 15 bezeichnet. Die Stirnplatten 16 umschliessen eine Toröffnung 17, die genau vor der Öffnung 3 liegt.

Nahe vor den Stirnplatten 16 befinden sich fest verankerte Rammpfosten 18, die Beschädigungen der Umkleidung 12 vermeiden sollen. Vor den Stirnplatten 16 und an diesen montiert ist eine sog. Torabdichtung, die den Spalt zwischen dem Heck des Fahrzeuges und den Stirnplatten 16 abdichten soll. Stirnseitig hat sie verformbare Schürzen 19, die sich der Gestalt des Fahrzeuges 4 anpassen können, also im Sinne der Darstellung bei 19' in Richtung auf die Stirnplatten 16 verformt werden können.

Sowohl für die Öffnung 3 als auch die Toröffnung 17 ist ein Verschluss in Form eines Sektionaltores vorgesehen, denen je zu beiden Seiten ihrer Öffnung befindliche senkrechte Führungen 2o für die Betriebsstellung ihrer Sektionen 21 zugeordnet sind. An die senkrechten Führungen 2o schliesst sich ein Übergangsbogen 20' an, der zu waagerechten Führungen 22 für die Ruhestellung der Sektionen 21 oberhalb ihrer Öffnungen 3 bzw. 17 führt. Es versteht sich, dass die gemäss Zeichnung in ihrer Wirkstellung befindlichen, gelenkig untereinander verbundenen Sektionen 21 isolierend ausgebildet sein müssen. Wichtig ist dabei, dass sich beide Verschlüsse innerhalb der Umkleidung 12 befinden und die waagerechten Führungen 22 gegenläufig montiert sind. Insb. das der Öffnung 3 zugeordnete Sektionaltor ist dabei ein Schnellauftor, also ein Tor mit einem besonders ausgebildeten Antrieb, der eine momentane Verschlussbewegung bewirken kann.

Insg. gesehen bildet die Verkleidung 12 zusammen mit den beiden Verschlüssen eine Schleuse, die ein Überführen von Ladefahrzeugen, also Flurfördergeräten vom Tiefkühlhaus zum Fahrzeug 4 und in umgekehrter Richtung ohne nennenswerte Energieverluste ermöglicht. Insb. kann zum Überführen der Tiefkühlwaren der der Öffnung 3 zugeordnete Verschluss unmittelbar nach Passieren des Flurfördergerätes geschlossen werden, um so sicherzustellen, dass nach Möglichkeit immer ein Verschluss betätigt ist, wenn das Flurfördergerät sich im Ladebetrieb befindet. Auf jeden Fall soll stets das der Öffnung 3 zugeordnete Tor betätigt und geschlossen werden, wenn sich das Flurfördergerät entweder im Tiefkühlhaus 1 oder auf der Brückenplatte 7 bzw. im Fahrzeug 4 befindet.

Wichtig ist auch, dass sich die waagerechte Bodenwand 13 mit Abstand von der Fahrbahn 23 bzw. ihrer Ebene und nahe unterhalb der Brückenkonstruktion befindet, damit z. B. auch am Fahrzeug befindliche Ladeplattformen ( Ladehilfen ) in die so gebildete Tasche eingeführt werden können, wenn sie dank der Überladebrücke nicht benötigt werden. Aus diesem Grunde ist für den energiesparenden Verschluss der Toröffnung 17 auch vorgesehen, dass die unten liegende Sektion 21 dichtend auf dem vorderen Rand der Bodenwand 13 aufliegt. Daher hat der Verschluss für die Toröffnung 17 auch eine wesentlich grössere Wirkhöhe als der Verschluss für die Öffnung 3.

Es sei noch erwähnt, dass die beiden seitlichen Rammpfosten 18 durch einen waagerechten Rammbalken 24 verbunden sind, der sich etwa in Höhe der Bodenwand 13 befindet, um die erwähnte Tasche unterhalb der Bodenwand 13 nicht zu behindern.

## Patentansprüche

1. Vor einer verschliessbaren Gebäudeöffnung angeordnete Überladebrücke mit einer gebäudeseitig um eine waagerechte Achse verschwenkbaren Brückenplatte, die an ihrem freien Ende mit einer ein- und ausfahrbaren Verlängerung zur Auflage auf dem zu be- bzw. entladenden Fahrzeug versehen ist, dadurch gekennzeichnet, dass die Überladebrücke mit einer kanalartigen, wärme- bzw. kälteisolierenden, sich an das Gebäude anschliessenden Umkleidung (12) versehen ist, die vorne im wesentlichen mit dem freien Ende der Brückenplatte abschliesst und dort mit einem Torverschluss versehen ist.

2. Überladebrücke nach Anspruch 1, dadurch gekennzeichnet, dass beide Verschlüsse Sektionaltore sind, deren oberhalb ihrer zugehörigen Öffnungen (3,17) befindlichen, waagerechten Führungsschienen (22) zur Aufnahme der in der Ruhestellung befindlichen Sektionen (21) gegenläufig wirkend innerhalb der Umkleidung (12) angeordnet sind.

3. Überladebrücke nach Anspruch 1, dadurch gekennzeichnet, dass der dem freien Ende der Umkleidung (12) zugeordnete Verschluss im geschlossenen Zustand mit seinem unteren Ende die unterhalb der Überladebrücke befindliche Bodenwand (13) berührt.

4. Überladebrücke nach Anspruch 3, dadurch gekennzeichnet, dass sich die Bodenwand (13) nahe unterhalb der Überladebrücke im Abstand von der Fahrbahnebene (23) für die Fahrzeuge (4) befindet.

5. Überladebrücke nach Anspruch 1, dadurch gekennzeichnet, dass sich vor der Umkleidung (12) eine Abdichtungsvorrichtung für den Spalt zwischen dem Heck andockender Fahrzeuge (4) und der Stirnwand (16) der Umkleidung befindet.

6. Überladebrücke nach Anspruch 5, dadurch gekennzeichnet, dass die Abdichtungsvorrichtung senkrecht angeordnete, biegsame, schürzenartige Dichtungselemente (19) aufweist.

7. Überladebrücke nach Anspruch 1, dadurch gekennzeichnet, dass zumindest der der Öffnung (3) für das Gebäude zugeordnete Verschluss ein Schnellverschluss ist mit einer Verschlusszeit, die kleiner ist als die Verweilzeit der Fördergeräte für die zu verladenden Güter auf der Überladebrücke und im oder auf dem Fahrzeug, das be- oder entladen werden soll.

8. Überladebrücke nach Anspruch 1, dadurch gekennzeichnet, dass vor der Umkleidung (12) fest verankerte Rammpfosten (18) und/oder quer verlaufende Rammbalken (24) vorgesehen sind.

9. Überladebrücke nach Anspruch 4 und 8, dadurch gekennzeichnet, dass sich der Rammbalken (24) in Höhe der Bodenwand (13) befindet.

10. Überladebrücke nach Anspruch 1, dadurch gekennzeichnet, dass sich vorzugsweise zu beiden Seiten der Brückenplatte (7) innerhalb der Umkleidung (12) eine Trittfläche (5') befindet, die mit der in Ruhestellung befindlichen Brückenplatte (7) bzw. der Bodenfläche (5) des Gebäudes praktisch auf einer Höhe liegt.

11. Überladebrücke nach einem oder mehreren vorhergehenden Ansprüchen zur Verwendung bei Tiefkühlhäusern.
